# EUROPEAN PATENT APPLICATION

(11) **EP 4 579 285 A1**
(43) Date of publication of application: **02.07.2025**
(21) Application number: 24222879.9
(22) Date of filing: 23.12.2024
(51) Int. Cl.: G01T 1/169, G01T 7/00

(54) **MOBILE RADIATION DETECTION APPARATUS**

(30) Priority: 26.12.2023 CN 202311801406
(71) Applicant: NUCTECH COMPANY LIMITED, Beijing 100084 (CN); Tsinghua University, Haidian District Beijing 100084 (CN)
(72) Inventor: LI, Po, Beijing, 100084 (CN); LI, Yulan, Beijing, 100084 (CN); Zhao, Kun, Beijing, 100084 (CN); WANG, Kai, Beijing, 100084 (CN); PAN, Hongwei, Beijing, 100084 (CN); LI, Liheng, Beijing, 100084 (CN); WANG, Fengli, Beijing, 100084 (CN)
(74) Representative: Gunzelmann, Rainer

(57) **Abstract**

This disclosure relates to a mobile radiation detection apparatus, comprising: a movable mounting bracket (1); a radiation detector (2) for detecting a radiation type and/or a radiation dose of an object to be detected movably mounted on the movable mounting bracket (1) relative to the movable mounting bracket (1); an adjustment device provided between the radiation detector (2) and the movable mounting bracket (1) for adjusting a height and/or an angle of the radiation detector (2) relative to the movable mounting bracket (1); wherein in detecting the object to be detected, the mobile radiation detection apparatus moves the movable mounting bracket (1) and adjusts the height and/or angle of the radiation detector (2) relative to the movable mounting bracket (1) so that the radiation detector (2) approaches and aligns with the object to be detected.

## Description

### RELATED APPLICATION

This application is based on and claims priority to a Chinese patent application with Application No. 202311801406.5, filed on Dec. 26, 2023, and titled "Mobile Radiation Detection Apparatus", the disclosure of which is hereby incorporated herein as a whole.

### TECHNICAL FIELD

This disclosure relates to the technical field of radiation detection, and in particular to a mobile radiation detection apparatus.

### BACKGROUND ART

Radiation detection is often required at special sites. For example, for piping, storage facilities, containers or waste materials in nuclear power plants, nuclear facilities or uranium processing plants, radiation detection is often needed. Prior to the overhaul of nuclear power plants and facilities, radiation detection is also often necessary for the walls of buildings and structures, immovable equipment, radiation booths, radiation containers and floors. Radiation detection is also regularly carried out for vehicles carrying out nuclear waste transportation and decontamination activities for testing abnormal substances. For some large objects to be detected or objects that are difficult to move, the existing radiation detection methods mostly involve sampling the objects to be detected and sending the samples to a laboratory for detection. Factors such as the amount of samples, the selection of sampling points, and the time duration for sample submission can all affect the detection results. The sampling and submission solution often has difficulty in truly reflecting the actual radiation situation of the objects to be detected.

### CONTENTS OF THE INVENTION

This disclosure relates to a mobile radiation detection apparatus, comprising:
- a movable mounting bracket;
- a radiation detector, for detecting a radiation type and/or a radiation dose of an object to be detected,movably mounted on the movable mounting bracket relative to the movable mounting bracket; and
- an adjustment device arranged between the radiation detector and the movable mounting bracket for adjusting a height and/or an angle of the radiation detector relative to the movable mounting bracket;
wherein in the process of detecting the object to be detected with the mobile radiation detection equipment, the radiation detector is caused to approach and align with the object by moving the movable mounting bracket (1) and adjusting the height and/or angle of the radiation detector relative to the movable mounting bracket (1).

In some embodiments, the adjustment device comprises an angle adjustment assembly for adjusting the angle of the radiation detector relative to the movable mounting bracket and a height adjustment assembly for adjusting the height of the radiation detector relative to the movable mounting bracket. The height adjustment assembly comprises a first connection part fixedly connected to the movable mounting bracket, a first adjustment part movable in a height direction relative to the first connection part, and a height adjustment mechanism for adjusting the height of the first adjustment part relative to the first connection part. The radiation detector is connected to the first adjustment part through the angle adjustment assembly.

In some embodiments, the height adjustment mechanism comprises a screw extending in a vertical direction and rotatably mounted on the first connection part relative to the first connection part, and a nut threadedly fitted with the screw, wherein the nut is fixedly connected to the first adjustment part.

In some embodiments, the first connection part is a vertical arm frame extending in a vertical direction, and the height adjustment mechanism further comprises a handwheel having an axis in a horizontal direction and is rotatable relative to the vertical arm frame, a first bevel gear fixedly connected with the handwheel, and a second bevel gear fixedly connected and coaxially arranged with the screw, wherein the first bevel gear and the second bevel gear are meshed to each other.

In some embodiments, the angle adjustment assembly comprises a rotating shaft fixedly connected to the first adjustment part, a rotating disc rotatably disposed around the rotating shaft and a locking mechanism for locking or unlocking the relative rotation between the rotating disc and the first adjustment part, wherein the radiation detector is connected to the rotating disc in such a way that it rotates along with the rotating disc.

In some embodiment, the locking mechanism comprises a plurality of first holes arranged in a circumferential direction of the rotating disc, one or more second holes provided on the first adjustment part, and a bolt, wherein the bolt is inserted into one of the first holes and one of the second holes simultaneously to lock the relative rotation between the rotating disc and the first adjustment part, or the bolt is not inserted into the first holes and the second holes simultaneously to unlock the relative rotation between the rotating disc and the first adjustment part.

In some embodiments, the adjustment device adjusts the radiation detector to rotate about a horizontal direction.

In some embodiments, the radiation detector is a high-purity germanium gamma spectrometer.

In some embodiments, the movable mounting bracket comprises a plurality of traveling wheels provided at its bottom.

In some embodiments, an alignment detection component is further provided on the radiation detector for detecting whether the radiation detector is aligned with the object to be detected.

In some embodiments, the alignment detection component comprises a laser emitter provided on the radiation detector.

Based on the mobile radiation detection apparatus provided by this disclosure, by moving the movable mounting bracket and adjusting the height and/or angle of the radiation detector relative to the movable mounting bracket, the radiation detector can approach and align with the object to be detected, so that an accurate and effective radiation detection can be carried out on large objects to be detected or objects that are difficult to move, thus attaining more realistic radiation data at the site to be detected.

Other features and advantages of the disclosure will become clear from the following detailed description of exemplary embodiments thereof with reference to the accompanying drawings.

### BRIEF DESCRIPTION OF THE DRAWINGS

The accompanying drawings illustrated herein are used to provide a further understanding of the disclosure and are incorporated in and constitute a part of this disclosure. The exemplary embodiments of the disclosure and the description thereof serve to explain the disclosure and not to constitute an undue limitation of the disclosure. In the drawings:
Fig. 1 is a schematic structural view of a mobile radiation detection apparatus in some embodiments of this disclosure;
Fig. 2 is a schematic structural view at another angle of a mobile radiation detection apparatus from Fig. 1;
Fig. 3 is a schematic structural view of a part of a mobile radiation detection apparatus in some embodiments of this disclosure;
Fig. 4 is a schematic structural view of a mobile radiation detection apparatus in some embodiments of this disclosure.

### DETAILED DESCRIPTION OF THE EMBODIMENTS

With reference to the accompanying drawings in the embodiments of the disclosure, the technical solutions in the embodiments of the disclosure will be described clearly and completely. Apparently, the embodiments described are only some embodiments of the disclosure, rather than all embodiments. The following description of at least one exemplary embodiment is in fact merely illustrative and is in no way limits the disclosure and its application, or uses. All other embodiments, which can be derived by a person skilled in the art from the embodiments disclosed herein without creative effort, are intended to be within the scope of the present disclosure.

The relative arrangement of parts and steps, numerical expressions and numerical values set forth in these embodiments do not limit the scope of the disclosure unless specifically stated otherwise. Meanwhile, it should be understood that the sizes of the respective portions shown in the drawings are not drawn in an actual proportional relationship for the convenience of description. Techniques, methods, and apparatus known to one of ordinary skill in the relevant art may not be discussed in detail, but are intended to be part of the granted specification where appropriate. In all examples shown and discussed herein, any particular value should be construed as exemplary only and not as limiting. Thus, other examples of the exemplary embodiments may have different values. It should be noted that: similar reference signs and letters refer to similar items in the accompanying drawings bellow, and thus, once an item is defined in one figure, it need not be discussed further in subsequent figures.

The mobile radiation detection apparatus in this embodiment comprises a movable mounting bracket 1 and a radiation detector 2.

The movable mounting bracket 1 is a mounting bracket that can be moved. In some embodiments, the movable mounting bracket 1 is moved by providing a traveling mechanism at its bottom, such as traveling wheels, crawlers, or the like. In some embodiments, the mounting bracket is disposed on other mobile devices to achieve mobility, for example, the mounting bracket is placed on a movable trolley to enable movement.

The radiation detector 2 for detecting a radiation type and/or a radiation dose of an object to be detected is movably mounted on the movable mounting bracket 1 relative to the movable mounting bracket 1. In some embodiments, the radiation detector only detects the radiation type of the object to be detected, e.g. whether the radiation type is α-ray, β-ray, or γ-ray, etc. In some embodiments, the radiation detector only detects the radiation dose of the object to be detected. For example, the radiation detector is a radiation detector that specifically detects the γ ray dose of nuclear radiation and is used to measure the γ ray dose radiated by the object to be detected. In some embodiments, the radiation detector detects the radiation type and the radiation dose of the object to be detected simultaneously. In some embodiments, the radiation detector comprises a neutron dosimeter, an Xγ radiometer, a low background αβ meter, a surface αβ contamination meter, or the like.

The adjustment device is provided between the radiation detector 2 and the movable mounting bracket 1 and is used for adjusting a height and/or an angle of the radiation detector 2 relative to the movable mounting bracket 1. The adjustment device enables the radiation detector 2 to act relative to the movable mounting bracket 1 to adjust the height or angle of the radiation detector 2 relative to the movable mounting bracket 1, or to adjust both the height and the angle of the radiation detector 2 relative to the movable mounting bracket 1, so that in the process of detecting the object to be detected with the mobile radiation detection equipment, the radiation detector is positioned close to and aligned with the object by moving the movable mounting bracket and adjusting the height and/or angle of the radiation detector relative to the movable mounting bracket. When the radiation detector 2 approaches the object to be detected from different positions and is aligned with the object to be detected from different directions, the radiation conditions of the object to be detected in different directions are attainable. When the object to be detected is a spatial environment such as a factory building or a warehouse, by adjusting the angle and/or position of the radiation detector, the radiation conditions of the spatial environment can be detected from multiple angles and positions, enabling more accurate results such as the radiation type and/or radiation dose of the spatial environment.

The mobile radiation detection apparatus in this disclosure, by moving the movable mounting bracket 1 and adjusting the height and/or angle of the radiation detector 2 relative to the movable mounting bracket 1, enables the radiation detector 2 to approach and align with the object to be detected, so that an accurate and effective radiation detection can be performed on large objects to be detected or objects that are difficult to move, or some objects to be detected which are inconvenient to be detected in the laboratory, etc., thus attaining more realistic radiation data at the site to be detected.

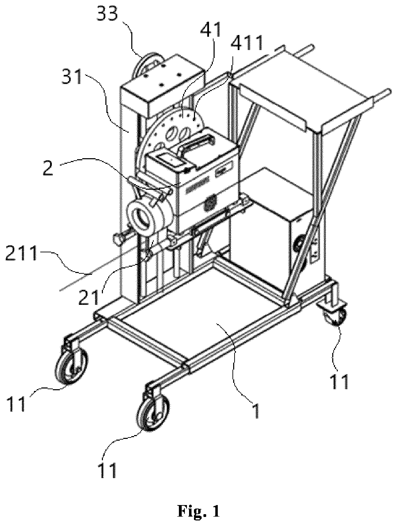

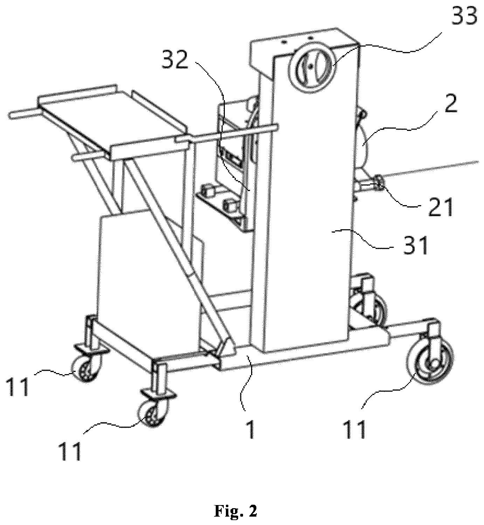

In some embodiments, as shown in Figs. 1 and 2, the adjustment device comprises an angle adjustment assembly for adjusting the angle of the radiation detector 2 relative to the movable mounting bracket 1 and a height adjustment assembly for adjusting the height of the radiation detector 2 relative to the movable mounting bracket 1. The height adjustment assembly comprises a first connection part 31 fixedly connected to the movable mounting bracket 1, a first adjustment part 32 movable in a height direction relative to the first connection part 31, and a height adjustment mechanism for adjusting the height of the first adjustment part 32 relative to the first connection part 31. The radiation detector 2 is connected to the first adjustment part 32 through the angle adjustment assembly. The adjustment device in this embodiment can adjust the angle of the radiation detector 2 through the angle adjustment assembly. After the height of the first adjustment part relative to the first connection part has been adjusted, the first adjustment part drives the angle adjustment assembly to adjust the height relative to the first connection part, thereby also driving the radiation detector 2 connected to the angle adjustment assembly to adjust the height relative to the first connection part, that is, the height relative to the movable mounting bracket 1.

In some embodiments, as shown in Figs. 1 and 2, the height adjustment mechanism comprises a screw 521 extending in the vertical direction and rotatably mounted on the first connection part 31 relative to the first connection part 31, and a nut 522 threadedly fitted with the screw, wherein the nut is fixedly connected to the first adjustment part 32. By providing the screw-nut mechanism, the height of the first adjustment part 32 fixedly connected to the nut relative to the first connection part is adjustable by rotating the screw during adjustment.

In some embodiments, as shown in Figs. 1 and 2, the first connection part 31 is a vertical arm frame extending in a vertical direction. The height adjustment mechanism further comprises a handwheel 33 having an axis in a horizontal direction and rotatable relative to the vertical arm frame, a first bevel gear 511 fixedly connected with the handwheel 33, and a second bevel gear 512 fixedly connected and coaxially arranged with the screw, wherein the first bevel gear 511 and the second bevel gear 512 are meshed to each other. By turning the handwheel, the first bevel gear can be rotated. Then, through the meshing of the first bevel gear and the second bevel gear, the second bevel gear rotates, which in turn makes the screw rotate, thus enabling the adjustment of the height of the nut. In some embodiments, the screw-nut mechanism is a screw-nut mechanism with a self-locking function. When the height of the nut and the radiation detector has been adjusted by turning the handwheel, the nut and the radiation detector can self-lock at that height. In some embodiments, the screw-nut mechanism does not have a self-locking function. In this case, a bolt can be provided to fix the position of the handwheel after rotation. Alternatively, an elastic pressing device can be provided to press the handwheel, maintaining the position of the handwheel fixed, so that the radiation detector is maintained at the adjusted height. In this embodiment, the height of the radiation detector is adjusted by operating the handwheel manually, which is flexible and convenient.

In some embodiments, the height adjustment mechanism may also be a worm-gear-worm mechanism, which drives the worm gear to rotate by the handwheel to adjust the position of the worm extending in the vertical direction, thereby adjusting the height of the first adjustment part fixedly connected to the worm.

In some embodiments, as shown in Figs. 1 and 2, the angle adjustment assembly comprises a rotating shaft fixedly connected to the first adjustment part 32, a rotating disc 41 rotatably disposed around the rotating shaft and a locking mechanism for locking or unlocking the relative rotation between the rotating disc 41 and the first adjustment part 32, wherein the radiation detector 2 is connected to the rotating disc 41 in such a way that it rotates along with the rotating disc 41. The rotating disc 41 and the rotating shaft can be connected by providing a bearing. The rotating disc 41 and the radiation detector can be directly fixedly connected or driven by gear transmission or the like. In the embodiment shown in the figures, the rotating disc 41 is directly fixedly connected to the radiation detector, so that the radiation detector can be driven to adjust the angle by turning the rotating disc 41 manually.

In some embodiment, the locking mechanism comprises a plurality of first holes 411 arranged in a circumferential direction of the rotating disc 41, one or more second holes 532 provided on the first adjustment part 32, and a bolt 531, wherein the bolt is inserted into one of the first holes 411 and one of the second holes simultaneously to lock the relative rotation between the rotating disc 41 and the first adjustment part 32, or the bolt is not inserted into the first hole 411 and the second hole simultaneously to unlock the relative rotation between the rotating disc 41 and the first adjustment part 32. In the embodiment shown in Fig. 2, the first adjustment part 32 is a mounting seat, on which the second holes corresponding to the plurality of first holes 411 respectively distributed along the circular arc are provided. When the rotating disc has been turned at an angle, the bolt is inserted into the first hole and the second hole simultaneously, i.e. the current angle of the rotating disc can be locked, so that the adjusted angle of the radiation detector can be maintained. In some embodiments not shown, the locking mechanism includes an elastic compression device, such as an elastic compression device fixedly connected to the first adjustment part. After rotating the rotating disc, the elastic compression device presses against the surface of the rotating disc, thus maintaining the position of the rotating disc at that angle.

In some embodiments, as shown in Figs. 1 and 2, the adjustment device adjusts the radiation detector 2 to rotate about a horizontal direction. This allows the radiation detector to adjust the angle around the horizontal direction and align with the object to be detected at different angles.

In some embodiments, the radiation detector 2 is a high-purity germanium gamma spectrometer. High-purity germanium gamma spectrometers have advantages, e.g. they can measure a large number of nuclides, perform qualitative and quantitative measurements, and require simple sample pretreatment.

In some embodiments, the high-purity germanium gamma spectrometer is also equipped with a UPS (Uninterruptible Power Supply) mechanism, which can enhance the endurance of the high-purity germanium gamma spectrometer.

In some embodiments, as shown in Figs. 1 and 2, the movable mounting bracket 1 comprises a plurality of traveling wheels 11 provided at its bottom. In some embodiments, some of the traveling wheels 11 are universal wheels, which can improve the steering flexibility of the movable mounting bracket 1.

In some embodiments, the mobile radiation detection apparatus further comprises an alignment detection component provided on the radiation detector 2 for detecting whether the radiation detector 2 is aligned with the object to be detected. In some embodiments, the alignment detection component comprises a laser emitter 21 provided on the radiation detector 2. The laser emitter, as shown in the figures, emits laser beam 211 and determines whether the radiation detector 2 is aligned with the object to be detected by judging whether the laser beam 211 is aligned with the object to be detected.

Finally, it is to be noted: the above embodiments are only intended to illustrate the technical solution of the disclosure and not to limit it; although the disclosure has been described in detail with reference to preferred embodiments, the ordinary skill in the art will understand that: modifications to the specific embodiments of the disclosure or equivalent substitutions for parts of the technical features may still be made; all of which are intended to be covered by the scope of the technical solutions claimed in this disclosure without departing from the spirit thereof.

## Claims

1. A mobile radiation detection apparatus, comprising:
- a movable mounting bracket (1);
- a radiation detector (2) movably mounted on the movable mounting bracket (1) relative to the movable mounting bracket (1), for detecting a radiation type and/or a radiation dose of an object to be detected; and
- an adjustment device arranged between the radiation detector (2) and the movable mounting bracket (1), for adjusting a height and/or an angle of the radiation detector (2) relative to the movable mounting bracket (1);
wherein in the process of detecting the object to be detected with the mobile radiation detection equipment, the radiation detector is caused to approach and align with the object by moving the movable mounting bracket (1) and adjusting the height and/or angle of the radiation detector relative to the movable mounting bracket (1).

2. The mobile radiation detection apparatus according to claim 1, wherein the adjustment device comprises:
an angle adjustment assembly for adjusting the angle of the radiation detector (2) relative to the movable mounting bracket (1); and
a height adjustment assembly, for adjusting the height of the radiation detector (2) relative to the movable mounting bracket (1), comprising a first connection part (31) fixedly connected to the movable mounting bracket (1), a first adjustment part (32) movable in a height direction relative to the first connection part (31), and a height adjustment mechanism for adjusting the height of the first adjustment part (32) relative to the first connection part (31), wherein the radiation detector (2) being connected to the first adjustment part (32) through the angle adjustment assembly.

3. The mobile radiation detection apparatus according to claim 2, wherein the height adjustment mechanism comprises a screw (521) extending in a vertical direction and rotatably mounted on the first connection part (31), and a nut (522) threadedly fitted with the screw and fixedly connected to the first adjustment part (32).

4. The mobile radiation detection apparatus according to claim 3, wherein the first connection part (31) is a vertical arm frame extending in a vertical direction, and the height adjustment mechanism further comprises a handwheel (33) having an axis in a horizontal direction and being rotatable relative to the vertical arm frame, a first bevel gear (511) fixedly connected with the handwheel (33), and a second bevel gear (512) fixedly connected and coaxially arranged with the screw, wherein the first bevel gear (511) and the second bevel gear (512) are meshed to each other.

5. The mobile radiation detection apparatus according to claim 2, wherein the angle adjustment assembly comprises a rotating shaft fixedly connected to the first adjustment part (32), a rotating disc (41) rotatably disposed around the rotating shaft and a locking mechanism for locking or unlocking the relative rotation between the rotating disc (41) and the first adjustment part (32), wherein the radiation detector (2) is connected to the rotating disc (41) in such a way that it rotates along with the rotating disc (41).

6. The mobile radiation detection apparatus according to claim 5, wherein the locking mechanism comprises:
a plurality of first holes (411) arranged in a circumferential direction of the rotating disc (41);
one or more second holes (532) provided on the first adjustment part (32); and
a bolt (531), inserted into one of the first holes (411) and one of the second holes (532) simultaneously to lock the relative rotation between the rotating disc (41) and the first adjustment part (32), or a bolt being not inserted into the first hole (411) and the second hole simultaneously to unlock the relative rotation between the rotating disc (41) and the first adjustment part (32).

7. The mobile radiation detection apparatus according to claim 1, wherein the adjustment device is configured to adjust the radiation detector (2) to rotate about a horizontal direction.

8. The mobile radiation detection apparatus according to claim 1, wherein the radiation detector (2) is a high-purity germanium gamma spectrometer.

9. The mobile radiation detection apparatus according to claim 1, wherein the movable mounting bracket (1) comprises a plurality of traveling wheels (11) at its bottom.

10. The mobile radiation detection apparatus according to claim 1, further comprising an alignment detection component provided on the radiation detector (2) for detecting whether the radiation detector (2) is aligned with the object to be detected.

11. The mobile radiation detection apparatus according to claim 10, wherein the alignment detection component comprises a laser emitter (21) provided on the radiation detector (2).
